# EUROPÄISCHE PATENTSCHRIFT

(11) **EP 1 194 008 B1**
(45) Veröffentlichungstag und Bekanntmachung des Hinweises auf die Patenterteilung: **20.01.2010**
(21) Anmeldenummer: 01122759.2
(22) Anmeldetag: 21.09.2001
(51) Int. Cl.: H02M 7/5387, H05B 6/04, H05B 6/06

(54) **Umrichterschaltung und Verfahren zum Betrieb einer solchen**
Inverter circuit and its method of controlling
Circuit convertisseur et son procédé de commande

(30) Priorität: 29.09.2000 ES 200002440
(43) Veröffentlichungstag der Anmeldung: 03.04.2002
(73) Patentinhaber: BSH Bosch und Siemens Hausgeräte GmbH, 81739 München (DE)
(72) Erfinder: Garcia Jimènez, José Ramon, 50009 Zaragoza (ES); Monterde Aznar, Fernando, 50013 Zaragoza (ES); Hernandez Blasco, Pablo Jesus, 50017 Zaragoza (ES); Burdio, Jose Miguel, 50005 Zaragoza (ES)
(74) Vertreter: Richter, Harald

(56) Entgegenhaltungen:
- EP-A- 0 844 807
- EP-A- 0 926 926
- EP-A- 0 986 287
- MONTERDE F ET AL: "Unipolar voltage-cancellation control of resonant inverters for induction cooking appliances" INDUSTRIAL ELECTRONICS SOCIETY, 1998. IECON '98. PROCEEDINGS OF THE 24TH ANNUAL CONFERENCE OF THE IEEE AACHEN, GERMANY 31 AUG.-4 SEPT. 1998, NEW YORK, NY, USA,IEEE, US, Bd. 2, 31. August 1998 (1998-08-31), Seiten 820-824, XP010308092 ISBN: 0-7803-4503-7
- MONTERDE F ET AL: "A new ZVS two-output series-resonant inverter for induction cookers obtained by a synthesis method" POWER ELECTRONICS SPECIALISTS CONFERENCE, 2000. PESC 00. 2000 IEEE 31ST ANNUAL 18-23 JUNE 2000, PISCATAWAY, NJ, USA,IEEE, Bd. 3, 18. Juni 2000 (2000-06-18), Seiten 1375-1380, XP010518960 ISBN: 0-7803-5692-6

## Beschreibung

Die Erfindung betrifft eine Umrichter- bzw. Inverterschaltung, insbesondere für eine Induktionskochstelle, nach dem Oberbegriff des Anspruchs 1 sowie ein Betriebsverfahren für eine solche.

Kochstellen mit induktiver Heizung, die nachfolgend als Induktionskochstellen bezeichnet werden, werden mit einer in der Kochplatte oder Kochfläche angeordneten Induktionsspule betrieben, die in einem das Kochgut enthaltenden Behälter, der ein ferromagnetisches Material aufweist, Induktionsströme erzeugt. Durch die Wirkung der Induktionsströme und der Ummagnetisierungen in der Wandung des Kochgefäßes wird der Behälter und damit das Kochgut erwärmt. Derartige Kochstellen haben einen wesentlich höheren Wirkungsgrad als andere elektrisch betriebene Kochstellen, bleiben im Betrieb "kalt" und stellen geringere Anforderungen an die Ebenheit des Topfbodens.

Die Energieversorgung von Induktionskochstellen erfolgt in der Regel von einer Stromquelle, die einen Wechselstrom mit einer Amplitude (Spitze-Spitze) von ca. 18 bis 45 A und einer Frequenz zwischen 25 und 40 kHz liefert, und die Leistung einer einzelnen Kochstelle liegt im Bereich zwischen 300 W und 3 kW. Die in den meisten Industrieländern erhältlichen Induktionskochgeräte haben zwischen zwei und vier Induktionskochstellen, die auch mit herkömmlichen Kochstellen kombiniert sein können. Bei modernen Geräten dieser Art umfassen einzelne oder alle Kochstellen zwei konzentrisch zueinander spiralig gewickelte Induktivitäten, von denen die äußere der inneren wahlweise zuschaltbar ist. Die Bereitstellung der vergleichsweise hochfrequenten Betriebsströme erfolgt durch Inverterschaltungen (Umrichter).

Die Technik der Ansteuerung von Induktionskochstellen bzw.-geräten - üblicherweise über Leistungshalbleiterschaltungen - ist wegen der o. g. Vorteile seit längerem Gegenstand intensiver Entwicklungsarbeiten, die insbesondere die Ziele einer weiteren Erhöhung des Wirkungsgrades und einer Senkung des Bauelement- und Schaltungsaufwandes und damit der Gestehungskosten sowie schließlich einer weiteren Erhöhung des Gebrauchswertes für den Nutzer verfolgen.

Unter dem letztgenannten Gesichtspunkt beschreibt die EP 0 286 044 A2 eine Schaltung zur Stromversorgung einer induktiven Kochstelle, die die Umschaltung der Stromquelle auf zwei Kochplatten unter Vermeidung von lästigen Störgeräuschen durch zwei über einen Mikroprozessor gesteuerte Relais realisiert. Die Vermeidung der Umschaltgeräusche wird hier durch die Umschaltung der Kochplatten im Umgebungsbereich des Nulldurchgangs der Netzspannung erreicht, wozu der Mikroprozessor eine entsprechende Information von der Stromquelle erhält.

Die EP 0 583 519 A1 beschreibt ein Induktionskochgerät mit zwei Induktionsspulen, denen gemeinsam ein Halbbrückenumrichter zugeordnet ist, an den sie über ein Relais alternierend anschließbar sind. In der DE 196 54 268 C2 wird eine Weiterentwicklung dieser Anordnung beschrieben mit der eine kompaktere Steuerschaltung bereitgestellt werden soll. Neben den erwähnten Induktionsheizspulen (induktiven Lasten) hat das Kochgerät einen Gleichrichter und eine Umrichterschaltung mit mindestens drei an den Gleichrichter angeschlossenen und in Reihe geschalteten Leistungstransistoren, zu denen jeweils eine Diode antiparallel und ein Hilfsresonanzkondensator parallel geschaltet sind. Weiter hat es in Zuordnung zu jeder Induktionsheizspule jeweils einen Hauptresonanzkondensator sowie Hilfsdioden, die jeweils zwischen einem Eingang eines Hauptresonanzkondensators und einem Gleichrichterausgang liegen, derart, daß beim Betrieb der einen Induktionsheizspule die andere nicht mit Spannung versorgt wird.

In der EP 0 724 379 wird ein Steuergerät für Induktionskochstellen mit mehreren Heizelementen beschrieben, die eine Mehrzahl von parallel zueinander anschließbaren Induktionsspulen aufweisen. Dieses Steuergerät hat vier Ausgänge und ermöglicht in differenzierter Weise separate Ansteuerungen sowie Zusammenschaltungen mehrerer Induktionsspulen. Die Umrichterschaltung umfaßt im wesentlichen zwei elektronische HF-Schalter, bis zu vier induktive Lasten, eine Resonanzkreis-Kondensatorbatterie und bis zu vier einpolige Umschalter.

In der EP 0 986 287 A2 werden eine Inverterschaltung mit zwei Ausgängen sowie ein Verfahren zur Steuerung der in deren Ausgänge eingespeisten Leistung beschrieben, mit denen wahlweise eine Last oder zwei Lasten gleichzeitig (insbesondere Induktionsheizspulen von induktiven Kochstellen) versorgt werden sollen. Mit der dort vorgeschlagenen Umrichterschaltung und dem zugehörigen Steuerverfahren sollen die Dimensionierung der Umschalter und Leistungs-Halbleiterbauelemente sowie die Steuerung der Leistungsversorgung der Induktionsspulen optimiert und die Geräuschentwicklung minimiert werden. Der dort vorgeschlagene Inverter ist vom unsymmetrischen, dreiphasigen H-Brückentyp mit einem gemeinsamen Zweig und zwei voneinander unabhängigen Zweigen, die Leistungsbauelemente umfassen. Er hat zwei die Topologie verändernde Umschalter zur wahlweisen Steuerung einer der beiden Induktionsspulen oder beider gleichzeitig. Zwischen jeder Spule und dem gemeinsamen Zweig sind in Serienschaltung Kondensatoren zur Reduzierung des mittleren Stromflusses durch die Leistungs-Halbleiterbauelemente (Transistoren) vorgesehen.

Aus der EP 0 971 562 A1 ist eine Mehrspulenanordnung für Induktionskochstellen bekannt, die die Herstellung von Kochgeräten für den Heimgebrauch und den professionellen Einsatz mit identischen Induktionsspulen und Umrichter- bzw. Wandlerschaltungen erlaubt.

Diese Anordnungen haben - neben vielen weiteren Entwicklungsergebnissen - Fortschritte bei der Lösung der oben erwähnten allgemeinen Aufgaben gebracht, jedoch bisher nicht zu einem massenhaften Einsatz von Induktionskochstellen im privaten oder kommerziellen Bereich führen können.

Der Erfindung liegt daher die Aufgabe zugrunde, eine weiter verbesserte Umrichterschaltung der gattungsgemäßen Art sowie ein effizientes Betriebsverfahren für eine solche anzugeben, mit denen der Aufwand zur Realisierung einer flexiblen Steuerung mehrerer Lasten (Kochstellen bzw. Induktionsspulen) weiter verringert und deren Betrieb noch effizienter und nutzerfreundlicher gestaltet werden kann.

Diese Aufgabe wird hinsichtlich ihres Vorrichtungsaspektes durch eine Umrichterschaltung mit den Merkmalen des Anspruchs 1 und hinsichtlich ihres Verfahrensaspektes durch ein Betriebsverfahren mit den Merkmalen des Anspruchs 9 gelöst.

In ihrem Vorrichtungsaspekt schließt die Erfindung den wesentlichen Gedanken einer partiellen Duplizierung einer herkömmlichen Invertertopologie zur Ausbildung einer Topologie mit mehreren Ausgängen ein. Dupliziert bzw. multipliziert werden hierbei diejenigen Abschnitte der bekannten Topologie, die eine unabhängige Steuerung der Ausgänge ermöglichen. Die Ausführung dieser partiellen Duplizierung erfordert die Identifizierung der zur Steuerung des Ausgangs notwendigen Abschnitte der ursprünglichen Topologie. Die durch dieses Vorgehen geschaffene Topologie kann durch Einführung zusätzlicher Umschalter (Kommutatoren) optimiert werden, durch die inaktive Ausgänge wahlweise zur Speisung aktiver Ausgänge umkonfiguriert werden können. Dies ermöglicht eine Erhöhung des Umrichtungs- bzw. Konversions-Wirkungsgrades und eine (weitere) Reduzierung der Betriebstemperatur der Leistungsbauelemente im Sinne der oben genannten Aufgabe.

Die Erfindung schließt desweiteren den Gedanken der Benutzung und Modifikation einer Umrichterstruktur vom Brücken- bzw. Halbbrückentyp zur Bildung einer Umrichtertopologie mit mehreren Ausgängen ein. Sind alle Schalter der Brücken-Topologie zur Steuerung des Ausgangs erforderlich, gibt es keinen durch eine Topologie mit mehreren Ausgängen gemeinsam zu nutzenden Abschnitt, d. h. für die Topologie mit mehreren Ausgängen führt das Prinzip der partiellen Duplizierung zu einer Duplizierung (bzw. Multiplizierung) der Anzahl der Konfigurationsumschalter bzw. Kommutatoren.

Die wesentlichen Entwurfsprinzipien der Erfindung ermöglichen eine vorteilhafte Steuerung nicht nur von Induktionskochgeräten, sondern auch von anderen elektrischen Geräten, bei denen Inverterschaltungen mit mehreren Ausgängen eingesetzt werden könnenbeispielsweise von Elektromotoren mit mehreren Wicklungen bzw. Haupt- und Hilfswicklungen, Transformatoranordnungen mit mehreren Wicklungen und/oder Haupt- und Hilfswicklungen sowie Beleuchtungsanordnungen.

Unter dem Blickwinkel des Betriebsverfahrens schließt die Erfindung den Gedanken ein, eine Steuerstrategie mit gleicher Frequenz für alle Ausgänge des Umrichters vorzusehen. Eine geeignete Steuerstrategie soll eine Reduzierung der Verluste über den gesamten Leistungsbereich und damit der Anforderungen an die Kühlung und/oder die Bauelementespezifikationen unter Beibehaltung der in der vorgeschlagenen Konfiguration liegenden Vorteile erbringen. Diese - weiter unten genauer erläuterte - Strategie kann als einpolige Spannungsunterdrückung bzw. -aufhebung bezeichnet werden.

Die vorgeschlagene Umrichterschaltung baut auf auf der an sich bekannten Serienresonanz-Brückenschaltung mit einem Ausgang, die zur Hochfrequenz-Stromversorgung einer einzigen induktiven Last eingesetzt werden kann. Sie hat Zweige, in denen elektronische Hochfrequenzschalter angeordnet sind, die relativ kostenaufwendige Leistungs-Halbleiterbauelemente umfassen. Mit der Erfindung wird hier die Stromversorgung mehrerer Lasten mit einer reduzierten Anzahl kostspieliger Leistungsbauelemente und damit die Bereitstellung einer insgesamt kostengünstigeren Umrichterschaltung ermöglicht. Zudem weist die vorgeschlagene Schaltung eine verbesserte Ansteuerbarkeit und vor allem auch eine sehr niedrige Geräuschentwicklung auf. Zudem verbessert sie die Steuerbarkeit einer Anordnung aus mehreren induktiven Lasten und die Ausnutzung der vorhandenen Resonanzkondensatoren bzw. Kondensatorbatterien. Die Schalter werden nur betätigt, wenn der Leistungsbedarf einer der Lasten sich auf Null oder von Null ausgehend ändert, was tendenziell die Lebensdauer erhöht.

Ein speziell für Induktionskochgeräte wichtiger Spezialfall der erfindungsgemäßen Umrichterschaltung ist eine solche mit zwei Ausgängen, die über zwei einpolige Umschalter wahlweise mit jeweils zwei von insgesamt vier oder allen vier elektronischen Hochfrequenzschaltern verbindbar sind. Da Induktionskochgeräte üblicherweise mit zwei oder vier induktiven Kochstellen ausgestattet sind, ermöglichen oder zwei solche Umrichterschaltungen(en) die Speisung eines kompletten Induktionskochgerätes oder Kombinations-Kochgerätes mit dem benötigen hochfrequenten Wechselstrom.

In einer weiter bevorzugten Ausführung ist ein Anschluß der Lasten jeweils direkt mit zwei elektronischen Hochfrequenzschaltern und die Umschalter über Serienkapazitäten jeweils mit einem Knotenpunkt zwischen zwei der Hochfrequenzschalter verbunden.

In einer hierzu alternativen Ausführung sind die Lasten jeweils mit einem Knotenpunkt zwischen zwei Teil-Serienkapazitäten und über diese mit einem ersten Anschluß der elektronischen Hochfrequenzschalter und die Umschalter jeweils direkt mit einem Knotenpunkt zwischen zwei der Hochfrequenzschalter verbunden.

Die Hochfrequenzschalter weisen - in an sich bekannter Weise - jeweils eine Parallelschaltung aus einem Leistungstransistor und einer Diode auf, und die Umschalter können in bewährter Weise als elektromechanische Relais ausgebildet sein. Weiterhin hat die Schaltung ein induktives und ein kapazitives Eingangsfilter. Mit dieser bewährten Bauelementkonstellation erreicht die Umrichterschaltung eine hohe Zuverlässigkeit und Lebensdauer bei günstigen Herstellungskosten. Die Parallelkapazitäten sind als Resonanzkondensatoren zur Erfüllung einer Resonanzbedingung oder Quasi-Resonanzbedingung mit einem induktiven Anteil der Lasten ausgebildet, wobei für die oben erwähnte Variante I.

Vorteile und Zweckmäßigkeiten der Erfindung ergeben sich im übrigen aus den abhängigen Änsprüchen sowie der nachfolgenden Beschreibung von Ausführungsbeispielen anhand der Figuren. Von diesen zeigen:
Fig. 1 ein Schaltbild (Prinzipskizze) einer Umrichterschaltung mit N Ausgängen gemäß einer ersten Ausführungsform der Erfindung,
Fig. 2 ein Schaltbild (Prinzipskizze) einer Umrichterschaltung mit N Ausgängen gemäß einer zweiten Ausführungsform der Erfindung,
Fig. 3 ein Schaltbild der Ausführungsform nach Fig. 1 für zwei widerstandsbehaftete Induktivitäten als Lasten,
Fig. 4 ein Schaltbild der Ausführungsform nach Fig. 2 für zwei widerstandsbehaftete Induktivitäten als Lasten,
Fig. 5 Spannungs- und Stromstärke-Kurvenformen über einer RLC-Last gemäß einer neuen Steuerstrategie,
Fig. 6 die Aktivierungssignale für elektronische HF-Schalter sowie die Spannungs- und Strom-Kurvenformen über den Lasten bei einer gemäß der Strategie nach Fig. 5 gesteuerten Zwei-Ausgangs-Brücken-Topologie und
Fig. 7 ein an Fig. 6 angelehntes Timingdiagramm der Ansteuersignale für eine Umrichterschaltung zur Steuerung von zwei Lasten über vier elektronische Schalter sowie die zugehörigen Spannungs- und Stromstärke-Kurvenformen.

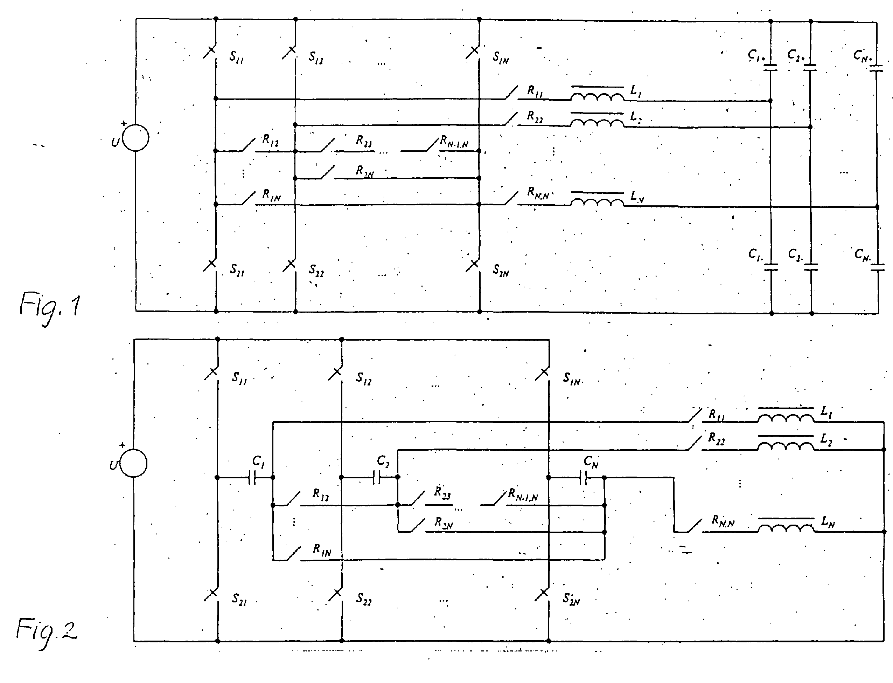

Fig. 1 und 2 zeigen in schematischen Darstellungen zwei verschiedene Ausführungen einer Umrichter- bzw. Konverterschaltung mit N Ausgängen bzw. induktiven Lasten, die mittels des oben beschriebenen Entwurfsprinzips der partiellen Duplizierung (Multiplizierung) aus einer Parallel-Quasiresonanz-Inverterschaltung mit einem Ausgang abgeleitet wurden. Hierin bezeichnen U eine Spannungsquelle, L₁, L₂, ... L_{N} induktive Lasten, S₁₁, ..., S_{2N} HF-Schalter, R₁₁, R₂₂, ..., R_{NN} Umschalter zum Abschalten der Induktivitäten und R₁₂ bis R_{2N} Umschalter zur Rekonfigurierung der Topologie für den Fall, daß nicht alle Induktivitäten eingeschaltet bzw. nicht sämtliche Ausgänge aktiv sind.

Bei der Ausführung nach Fig. 1 sind den induktiven Lasten L₁ bis L_{N} und den zugehörigen Ausschaltern R₁₁ bis R_{NN} jeweils kapazitive Teiler C₁₊, C₁₋ bis C_{N+}, C_{N-} derart zugeordnet, daß das vom jeweiligen Ausschalter abgewandte Ende der induktiven Last mit einem Knotenpunkt zwischen C₁₊ und C₁₋ bis C_{N+} und C_{N-} verbunden ist. Bei der Ausführung nach Fig. 2 sind Kondensatoren bzw. Kondensatorbatterien C1 bis CN jeweils zwischen einen Knotenpunkt zwischen zwei elektronische Schalter S₁₁, S₂₁ bis S_{1N}, S_{2N} einerseits und einen Knotenpunkt zu einer Parallelschaltung geschaltet, in deren einem Zweig jeweils ein Ausschalter R₁₁ bis R_{NN} mit der zugehörigen induktiven Last L₁ bis L_{N} in Reihe geschaltet ist und die weitere Zweige mit Rekonfigurations-Umschaltern hat.

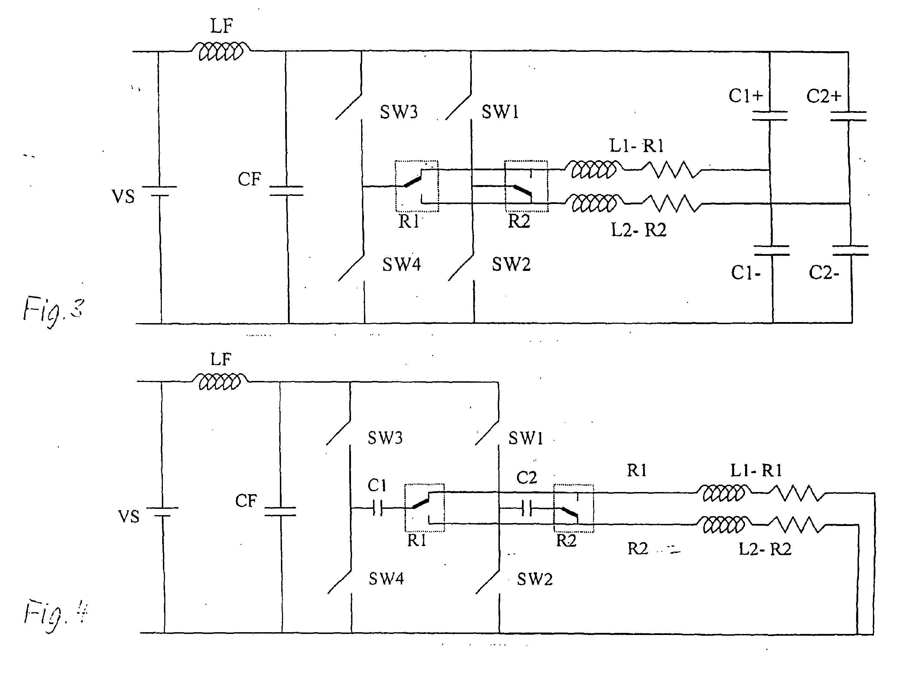

Fig. 3 und 4 zeigen spezielle Ausführungen der Prinzipschaltungen nach Fig. 1 und 2, bei denen die Spannungsquelle mit VS bezeichnet und jeweils ein induktives Eingangsfilter LF und ein kapazitives Eingangsfilter CF vorgesehen ist. Die Induktivitäten (Lasten) sind hier als widerstandsbehaftete Induktivitäten mit L1-R1 bzw. L2-R2 und die zugehörigen Kondensatorbatterien mit C1 und C2 bzw. C1+, C1- und C2+, C2- bezeichnet. In beiden Schaltungen sind vier elektronische Schalter SW1 bis SW4 und zwei Umschalter (elektromechanische Relais) R1, R2 vorgesehen, wobei die letzteren eine Parallelschaltung der Induktivitäten in vier Konfigurationsmöglichkeiten mit den HF-Schaltern verbinden.

Hier unterscheidet sich die zweite Variante (Fig. 4) von der ersten (Fig. 3) dadurch, daß die Resonanzfrequenz von den Aktivierungszuständen von R1 und R2 abhängt.

Die Aktivierungszustände von R1, R2 sind normalerweise geschlossen ("nc"). Die Schaltstrategie für die HF-Schalter SW1, SW2 ist wie folgt: Die EIN-Zeit wird zur Variation der Ausgangsleistung gesteuert, und die AUS-Zeit wird zur Erfüllung der ZVS-Schaltbedingung für die Transistoren eingestellt.

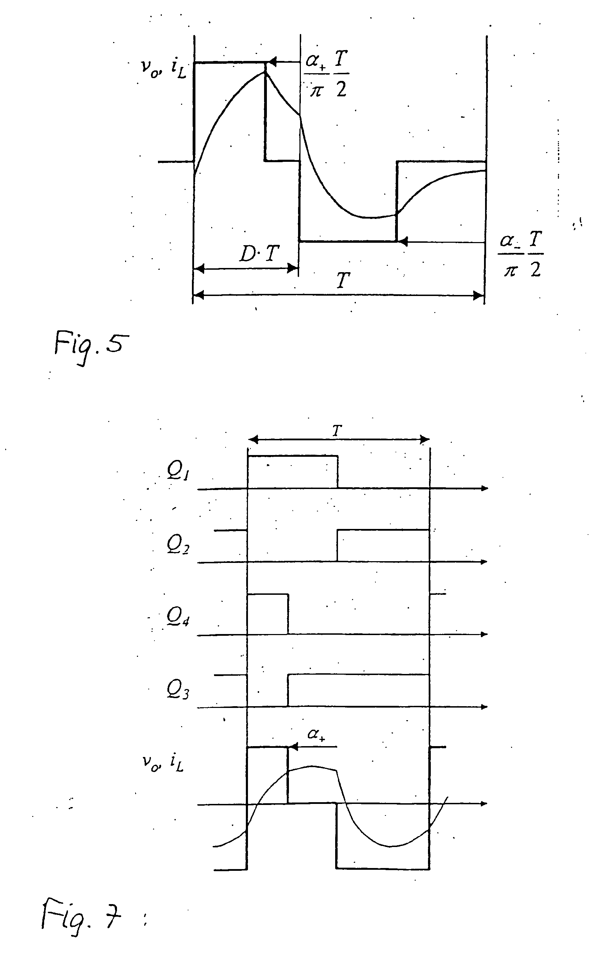

Fig. 5 zeigt die Spannungs-Kurvenform vₒ sowie Stromstärke-Kurvenform i_{L} in Abhängigkeit von der Zeit über einer RLC-Last während eines Schaltzyklus T gemäß einer bevorzugten Steuerstrategie für die vorgeschlagene Umrichterschaltung. Hierin sind D der Dienstzyklus und α₊ der Phasenwinkel in der positiven Halbperiode und α₋ der Phasenwinkel in der negativen Halbperiode.

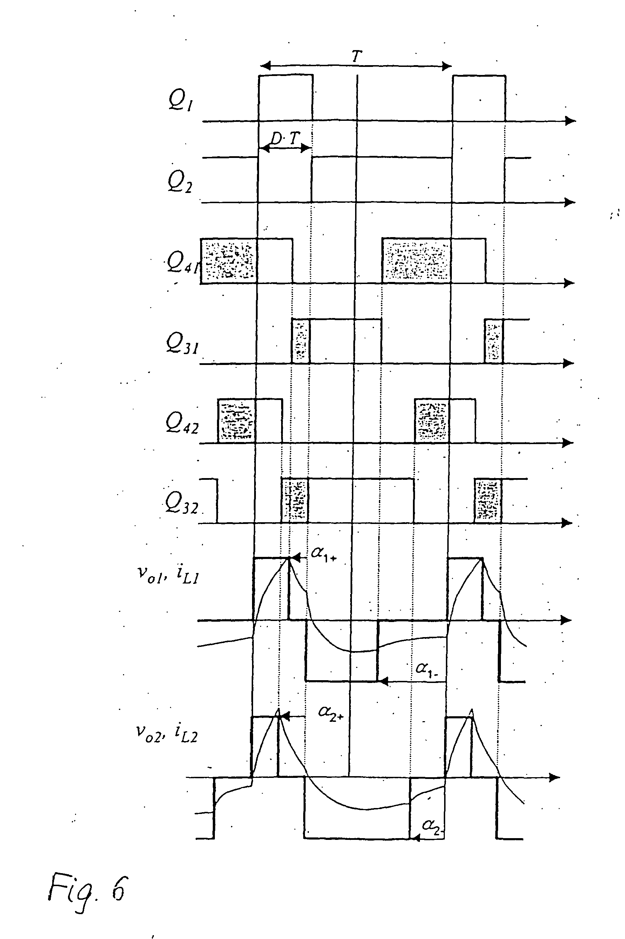

Fig. 6 zeigt in einem entsprechenden Timingdiagramm die Aktivierungssignale für sechs elektronische Schalter (Leistungs-Halbleiterbauelemente) Q₁ bis Q₄₂ einer Zwei-Ausgangs-Brücken-Topologie, die gemäß dieser Steuerstrategie angesteuert wird. Die Spannungen sind mit Vₒ₁, Vₒ₂ und die Stromstärken über den Lasten mit i_{L1} bzw. i_{L2} bezeichnet, und α₁₊, α₂₊ bezeichnen wieder die Phasenwinkel in der positiven Halbwelle und α₁₋ bzw. α₂₋ die Phasenwinkel in der negativen Halbwelle.

Die schraffierten Bereiche haben dieselbe Bedeutung wie bei der bekannten Phasenverschiebungs-Modulation. Wie auch bei bekannten Steuerstrategien können die Schalteinrichtungen (HF-Schalter) der Topologie vom ZVS- oder ZCS-Schalttyp sein, in Abhängigkeit von den konkreten Werten von D, α₊, α₋, m und Q.

Fig. 7 zeigt in einer an Fig. 6 angelehnten schematischen Darstellung ein Timingdiagramm der Aktivierungssignale für den Spezialfall der sogenannten einpoligen Spannungsaufhebung für den elementaren Fall einer einzelnen Last und von vier Schalteinrichtungen sowie die zugehörige Spannungs- und Stromstärke-Kurvenform.

Die Ausführung der Erfindung ist nicht auf die oben beschriebenen Beispiele und hervorgehobenen Aspekte beschränkt, sondern ebenso in einer Vielzahl von Abwandlungen, sowohl hinsichtlich des Schaltungsaufbaus und des konkreten Einsatzfeldes sowie des Steuerverfahrens, möglich.

## Patentansprüche

1. Umrichterschaltung vom Serienresonanz-Halbbrückentyp mit einer Topologie mit mindestens zwei Ausgängen zur Verbindung mit je einer Last (L₁... L_{N}; L1-R1, L2-R2), insbesondere einer Induktionsspule einer induktiven Kochstelle, mit einer Gleichspannungsquelle (U; VS), einer Halbbrückenschaltung mit Zweigen, welche jeweils elektronische Hochfrequenzschalter (S₁₁...S_{2N}; SW1-SW4) mit Leistungs-Halbleiterbauelementen umfassen, und Umschaltern (R₁...R_{NN}; R1, R2) zur Veränderung der Topologie zur wählbaren Speisung einer Last an einem ausgewählten Ausgang oder mehrerer Lasten an mehreren Ausgängen,
**dadurch gekennzeichnet,daß**
die Topologie mit mehreren Ausgängen durch eine partielle Multiplizierung einer Serienresonanz-Brückenschaltung mit einem Ausgang zur Hochfrequenz-Stromversorgung einer einzigen induktiven Last ausgebildet ist, wobei jedem Ausgang und damit jeder Last genau zwei Hochfrequenzschalter (S₁₁...S_{2N}; SW1-SW4) zugeordnet sind.

2. Umrichterschaltung nach Anspruch 1,
**gekennzeichnet durch**
zwei Ausgänge, die über zwei einpolige Umschalter (R1, R2) wahlweise mit jeweils zwei von insgesamt vier oder allen vier elektronischen Hochfrequenzschaltern (SW1-SW4) verbindbar sind.

3. Umrichterschaltung nach Anspruch 1 oder 2,
**dadurch gekennzeichnet,daß**
ein Anschluß der Lasten (L₁...L_{N}; L1-R1, L2-R2) jeweils direkt mit zwei elektronischen Hochfrequenzschaltern (S₁₁...S_{2N}; SW1-SW4) verbunden ist und die Umschalter (R₁₁...R_{NN}; R1, R2) über Serienkapazitäten (C₁...C_{N}; C1, C2) jeweils mit einem Knotenpunkt zwischen zwei der Hochfrequenzschalter verbunden sind.

4. Umrichterschaltung nach Anspruch 1 oder 2,
**dadurch gekennzeichnet, daß**
die Lasten (L₁...L_{N}; L1-R1, L2-R2) jeweils mit einem Knotenpunkt zwischen zwei Teil-Serienkapazitäten (C₁₋, C₁₊....C_{N-}, C_{N+}; C1-, C1+, C2-, C2+) und über diese mit einem ersten Anschluß der elektronischen Hochfrequenzschalter (S₁₁...S_{2N}; SW1-SW4) und die Umschalter (R₁₁...R_{NN}; R1, R2) jeweils direkt mit einem Knotenpunkt zwischen zwei der Hochfrequenzschalter verbunden sind.

5. Umrichterschaltung nach einem der vorangehenden Ansprüche,
**dadurch gekennzeichnet,daß**
die elektronischen Hochfrequenzschalter (S₁₁...S_{2N}; SW1-SW4) jeweils einen Transistor und eine zu diesem antiparallel geschaltete Diode aufweisen und die Umschalter als elektromechanische Relais ausgebildet sind.

6. Umrichterschaltung nach einem der vorangehenden Ansprüche,
**dadurch gekennzeichnet, daß**
die Serienkapazitäten (C₁...C_{N}; C1, C2; C₁₋, C₁₊...C_{N-}, C_{N+}; C1-, C1+, C2-, C2+) als Resonanzkondensatoren zur Erfüllung einer Resonanzbedingung oder Quasi-Resonanzbedingung mit einem induktiven Anteil der Lasten ausgebildet sind.

7. Induktionskochgerät mit einer Umrichterschaltung nach einem der vorangehenden Ansprüche und mindestens zwei induktiven Kochstellen, die jeweils mindestens eine, insbesondere spiralig in einer Ebene gewickelte, Induktionsspule als Last der Umrichterschaltung aufweisen.

8. Umrichterschaltung nach einem der vorangehenden Ansprüche,
**gekennzeichnet durch**
ein induktives (LF) und ein kapazitives (CF) Eingangsfilter.

9. Verfahren zum Betrieb einer Umrichterschaltung nach einem der Ansprüche 1 bis 6,
**dadurch gekennzeichnet, daß**
in jedem Betriebszustand jeweils alle Ausgänge der Umrichterschaltung mit der gleichen Frequenz versorgt werden und das Prinzip der einpoligen Spannungsaufhebung angewandt wird.

## Claims

1. Inverter circuit of series resonance half-bridge type with a topology with at least two outputs each for connection with a respective load (L₁...L_{N}; L1-R1, L2-R2), particularly an induction coil of an inductive cooking point, with a direct voltage source (U; VS), a half-bridge circuit with two branches each comprising a respective electronic high-frequency switch (S₁₁...S_{2N}; SW1-SW4) with power semiconductor components, and changeover switches (R₁₁...R_{NN}; R1, R2) for changing the topology for selectable supply of a load at a selected output or several loads at several outputs, **characterised in that** the topology with several outputs is formed by a partial multiplication of a series resonance bridge circuit with an output for high-frequency current supply of a single inductive load, wherein exactly two high-frequency switches (S₁₁...S_{2N}; SW1-SW4) are associated with each output and thus each load.

2. Inverter circuit according to claim 1, **characterised by** two outputs which are connected by way of two single-pole changeover switches (R1, R2) selectably with in each instance two of a total of four or all four electronic high-frequency switches (SW1-SW4).

3. Inverter circuit according to claim 1 or 2, **characterised in that** a connection of the loads (L₁...L_{N}; L1-R1, L2-R2) is respectively directly connected with two electronic high-frequency switches (S₁₁..,S_{2N}; SW1-SW4.) and the changeover switches (R₁₁...R_{NN}; R1, R2) are connected by way of series capacitances (C₁...C_{N}; C1, C2) with a respective junction between two of the high-frequency switches.

4. Inverter circuit according to claim 1 or 2, **characterised in that** the loads (L₁...L_{N}; L1-R1 L2-R2) are each connected with a junction between two part series capacitances (C₁₋, C₁₊...C_{N-}, C_{N+}; C1-, C1+, C2- C2+) and by way of this with a first connection of the electronic high-frequency switch (S₁₁...S_{2N}; SW1-SW4) and the changeover switches (R₁₁...R_{NN}; R1, R2) are each directly connected with a junction between two of the high-frequency switches.

5. Inverter circuit according to any one of the preceding claims, **characterised in that** the electronic high-frequency switches (S₁₁...S_{2N}; SW1-SW4) each comprise a transistor and a diode in antiparallel connection therewith and the changeover switches are formed as electromechanical relays.

6. Inverter circuit according to any one of the preceding claims, **characterised in that** the series capacitances (C₁...C_{N}; C1, C2; C₁₋, C₁₊...C_{N-}, C_{N+}; C1-, C1+, C2-, C2+) are constructed as resonance capacitors for fulfilment of a resonance condition or quasi resonance condition with an inductive component of the loads.

7. Induction cooking appliance with an inverter circuit according to any one of the preceding claims and at least two inductive cooking points, which each comprise at least one induction coil, which is, in particular, spirally wound in a plane, as load of the inverter circuit.

8. Inverter circuit according to any one of the preceding claims, **characterised by** an inductive input filter (LF) and a capacitive input filter (CF).

9. Method of operating an inverter circuit according to any one of claims 1 to 6, **characterised in that** each operating state all outputs of the inverter circuit are supplied each time with the same frequency and use is made of the principle of single-pole voltage cancellation.

## Revendications

1. Circuit mutateur de type en demi-pont à résonance série, ayant une topologie comprenant au moins deux sorties pour la connexion à respectivement une charge (L₁ ... L_{N}; L1-R1, L2-R2), notamment à une bobine d'induction d'une plaque de cuisson inductive, comprenant une source de tension continue (U ; VS), un circuit en demi-pont doté de branchements, lesquels comprennent respectivement des commutateurs électroniques à haute fréquence (S₁₁... S_{2N} SW1-SW4) munis de composants semi-conducteurs de puissance, et comprenant des commutateurs (R₁₁ ... R_{NN} ; R1, R2) pour modifier la topologie pour l'alimentation sélectionnable d'une charge sur une sortie sélectionnée ou de plusieurs charges sur plusieurs sorties,
**caractérisé en ce que**
la topologie est réalisée avec plusieurs sorties par une multiplication partielle d'un circuit en pont à résonance série avec une sortie pour l'alimentation en courant à haute fréquence d'une unique charge inductive, exactement deux commutateurs à haute fréquence (S₁₁ ... S_{2N} SW1-SW4) étant affectées à chaque sortie et donc à chaque charge.

2. Circuit mutateur selon la revendication 1,
**caractérisé par**
deux sorties qui sont connectables par l'intermédiaire de deux commutateurs unipolaires (R1, R2), au choix avec respectivement deux de, au total, quatre commutateurs électroniques à haute fréquence (SW1-SW4) ou avec tous les quatre commutateurs électroniques à haute fréquence.

3. Circuit mutateur selon la revendication 1 ou 2,
**caractérisé en ce qu'**
une connexion des charges (L₁ ... L_{N} ; L1-R1 ; L2-R2) est respectivement raccordée directement à deux commutateurs électroniques à haute fréquence (S₁₁ ... S_{2N} ; SW1-SW4) et **en ce que** les commutateurs (R₁₁ ... R_{NN} ; R1, R2) sont respectivement raccordés à un point nodal entre deux commutateurs à haute fréquence par l'intermédiaire de capacités série (C₁ ... C_{N} ; C1, C2).

4. Circuit mutateur selon la revendication 1 ou 2,
**caractérisé en ce que**
les charges (L₁ ... L_{N} ; L1-R1 ; L2-R2) sont respectivement raccordées à un point nodal entre deux capacités série partielles (C₁₋, C₁₊ ... C_{N-}, C_{N+} ; C1-, C1+, C2-, C2+) et, par l'intermédiaire de celles-ci, à une première connexion des commutateurs électroniques à haute fréquence (S₁₁ ... S_{2N} ; SW1-SW4) et **en ce que** les commutateurs (R₁₁ ... R_{NN} ; R1, R2) sont respectivement raccordés directement à un point nodal entre deux des commutateurs à haute fréquence.

5. Circuit mutateur selon l'une quelconque des revendications précédentes,
**caractérisé en ce que**
les commutateurs électroniques à haute fréquence (S₁₁ ... S_{2N} ; SW1-SW4) présentent respectivement un transistor et une diode montée de manière antiparallèle à celui-ci et **en ce que** les commutateurs sont réalisés comme relais électromécaniques.

6. Circuit mutateur selon l'une quelconque des revendications précédentes,
**caractérisé en ce que**
les capacités série (C₁ ... C_{N} ; C1, C2; C₁₋, C₁₊ ... C_{N-}, C_{N+}; C1-, C1+, C2-, C2+) sont réalisées comme condensateurs à résonance pour remplir une condition de résonance ou une condition de quasi résonance avec une fraction inductive des charges.

7. Appareil de cuisson à induction comprenant un circuit mutateur selon l'une quelconque des revendications précédentes et au moins deux plaques de cuisson inductives qui présentent respectivement au moins une bobine à induction, notamment enroulée en spirale dans un plan, en tant que charge du circuit mutateur.

8. Circuit mutateur selon l'une quelconque des revendications précédentes,
**caractérisé par** un filtre d'entrée inductif (LF) et un filtre d'entrée capacitif (CF).

9. Procédé destiné au fonctionnement d'un circuit mutateur selon l'une quelconque des revendications 1 à 6,
**caractérisé en ce que**
dans chaque état de fonctionnement, respectivement toutes les sorties du circuit mutateur sont alimentées avec la même fréquence et **en ce que** le principe de la suppression de tension unipolaire est appliqué.
